Europäisches Patentamt

European Patent Office

Office européen des brevets

(19)

(11) Numéro de publication: **0 042 314**
**B1**

(12) **FASCICULE DE BREVET EUROPEEN**

(45) Date de publication du fascicule du brevet:
**21.09.83**

(51) Int. Cl.³: **H 04 Q 1/14**

(21) Numéro de dépôt: **81400780.3**

(22) Date de dépôt: **18.05.81**

(54) **Répartiteur notamment pour central téléphonique.**

(30) Priorité: **18.06.80  FR 8013483**

(43) Date de publication de la demande:
**23.12.81 Bulletin 81/51**

(45) Mention de la délivrance du brevet:
**21.09.83 Bulletin 83/38**

(84) Etats contractants désignés:
**DE GB SE**

(56) Documents cités:
**DE-A-2 315 485**
**DE-B-2 754 558**

(73) Titulaire: **Pierresteguy, Jean-François, 35, rue de la Barauderie Darvault, F-77140 Nemours (FR)**

(72) Inventeur: **Pierresteguy, Jean-François, 35, rue de la Barauderie Darvault, F-77140 Nemours (FR)**

(74) Mandataire: **Cabinet Martinet, 62, rue des Mathurins, F-75008 Paris (FR)**

ACTORUM AG

## Répartiteur notamment pour central téléphonique

La présente invention concerne un répartiteur pour interconnecter au moyen de cordons de liaison des bornes de premiers connecteurs reliés aux extrémités de premiers câbles à des bornes de seconds connecteurs reliés aux extrémités de seconds câbles.

Un tel répartiteur est destiné notamment à relier des premiers câbles dits externes de lignes téléphoniques à des seconds câbles dits internes desservant les équipements de l'autocommutateur d'un central téléphonique. Les câbles externes sont reliés à des premiers connecteurs dits têtes de câble, éventuellement munis de moyens de protection. Les câbles internes sont reliés à des seconds connecteurs dits réglettes. Les cordons de liaisons appelés jarretières permettent d'établir des liaisons variables internes au répartiteur entre les câbles externes et internes à travers les têtes de câble et les réglettes.

Les répartiteurs connus pour central téléphonique peuvent être classés en deux principaux types. L'un est désigné par répartiteur double face, actuellement exploité en France, et l'autre est désigné par répartiteur tunnel.

Des répartiteurs double face sont décrits dans la FR-A-2 229 177 et la FR-A-2 317 843. Ils sont composés de rangées horizontales de têtes de câble à moyens de protection contre les courants et tensions élevés auxquelles sont raccordés les câbles multipaires du réseau, et de rangées horizontales de réglettes auxquelles sont raccordés les câbles multipaires provenant de l'autocommutateur. Généralement, chaque tête de câble est disposée verticalement et chaque réglette est disposée horizontalement. Les têtes et les réglettes sont fixées à une ossature métallique parallélépipédique dont les deux faces principales verticales supportent respectivement les rangées de réglettes et les rangées de têtes. Entre ces deux faces, un treillis de barres et traverses verticales et horizontales sont destinées à supporter les jarretières reliant chacune des paires de bornes d'une tête de câble sur l'une des faces à des paires de bornes d'une réglette sur l'autre face.

La séparation des emplacements des têtes de câble et des réglettes dans un répartiteur double face permet à des équipes affectées à des services différents, relatifs aux lignes et à la commutation par exemple, d'effectuer les nombreux câblages. En contre partie, du fait de cette séparation, il n'y a pas toujours harmonie entre les types de têtes et de réglettes utilisées, notamment et ces dernières ne sont pas disposées d'une manière telle que la longueur des jarretières soit optimale.

Une telle disposition implique que, pour la plupart des liaisons à établir, deux agents sont nécessaires pour raccorder une jarretière. En effet, la longueur de celle-ci est variable et parfois très longue. En outre, à cause de l'incoordination des services affectés aux lignes externes et des services affectés aux installations internes au central, les têtes et les réglettes ne sont pas disposées avec le souci d'optimiser la gestion des jarretières. La règle de cheminement d'une jarretière qui devrait être respectée, à savoir cheminement horizontal au niveau de la réglette horizontale et changement de niveau au droit de la tête de câble correspondante, n'est malheureusement que très peu suivie. De plus, l'accessibilité aux premières jarretières posées étant dans certains cas très difficile, le retrait de celles-ci est impossible. Ceci a pour résultat un engorgement des chemins accessibles et une impossibilité d'établir de nombreuses liaisons.

Un répartiteur du second type, dit tunnel, est divulgué dans la FR-A-2 340 658. Sa structure est à section en U renversé dont les faces latérales internes, verticales et parallèles, supportent respectivement les réglettes et les têtes de câble. La partie supérieure horizontale du répartiteur reliant les deux faces supporte des étriers à doigts pour le passage des jarretières. Les jarretières montent verticalement à partir des réglettes le long de la face interne associée, puis traversent horizontalement le tunnel et enfin descendent verticalement vers les têtes de câble le long de l'autre face interne.

Parmi les inconvénients du répartiteur tunnel, on peut citer les suivants. Les jarretières sont nécessairement très longues, puisque toutes doivent passer par la partie supérieure du répartiteur. Il n'existe donc pas de jarretières courtes. En outre, la hauteur du répartiteur doit être faible afin de faciliter l'introduction des jarretières entre les faces internes. Il en résulte que l'utilisation d'un répartiteur tunnel est limitée à un central téléphonique secondaire qui dessert un nombre de lignes téléphoniques relativement petit.

Par ailleurs, le DE-A-2 315 485 divulgue un répartiteur pour central téléphonique tel que défini dans le préambule de la revendication 1. Dans ce répartiteur, des premiers connecteurs, appelés également distributeurs, desservent des premiers câbles et sont disposés selon une première sous-matrice verticale supérieure, et des seconds connecteurs desservent des seconds câbles et sont disposés selon une sous-matrice verticale inférieure qui est en-dessous de la première sous-matrice. Les deux sous-matrices sont coplanaires et les colonnes ou rangées de connecteurs dans les deux sous-matrices sont deux-à-deux colinéaires.

Dans ce répartiteur, dont des perfectionnements concernent l'assemblage de l'ossature de celui-ci sont décrits dans la DE-B-2 754 558, laquelle est une demande de brevet d'addition relative à la DE-A-2 315 485, les deux sous-matrices forment donc deux ensembles totalement distincts, respectivement supérieur et inférieur. Entre ces deux ensembles sont prévus des moyens de passage horizontaux et verticaux, tels que des étriers ou anneaux à section horizontale afin d'enfiler à travers ceux-ci des cordons de liaison. Chaque cordon de liaison relie un connecteur dans une quelconque colonne de la première sous-matrice à un connecteur dans une quelconque colonne de la seconde sous-matrice.

Ce dernier type de répartiteur est donc analogue à un répartiteur tunnel dont les branches de la section en U ont été dépliées sur un plan vertical. Il en résulte que les inconvénients de ce répartiteur sont analogues à ceux déjà évoqués pour un répartiteur tunnel. En effet, les jarretières ou cordons de liaison sont nécessairement très longues puisque toutes doivent passer à travers les moyens de passage à étriers entre les deux sous-matrices. Il n'existe donc pas de jarretières courtes. Egalement, la hauteur du répartiteur doit être faible – et être nettement inférieure à celle des répartiteurs tunnels – puisque la hauteur du répartiteur est égale à environ trois fois celle d'une sous-matrice. Ce type de répartiteur est donc destiné à un central téléphonique secondaire qui dessert un nombre de lignes téléphoniques relativement petit.

La présente invention a pour but de fournir un répartiteur s'affranchissant des inconvénients ci-dessus évoqués, par le fait que chaque jarretière suit un acheminement obligatoire qui est prévu entre deux colonnes communes aux deux sous-matrices et qui est accessible aisément par la même face du répartiteur par laquelle sont tirés les câbles internes et externes. Il en résulte que la gestion des câbles et la disposition des têtes et des réglettes à relier à l'intérieur du répartiteur sont étroitement liées, ce qui évite tout engorgement de jarretières.

A cette fin, l'invention a pour objet un répartiteur pour interconnecter, au moyen de cordons de liaison traversant des anneaux, des bornes de premiers connecteurs reliés aux extrémités de premiers câbles à des bornes de seconds connecteurs reliés aux extrémités de seconds câbles, les premiers et seconds connecteurs étant disposés selon deux sous-matrices coplanaires ayant leur colonnes (resp. lignes) alignées, caractérisé en ce que les lignes (resp. colonnes) des deux sous-matrices sont entrelacées à l'ordre deux. Chaque colonne comprend ainsi une suite alternée de réglettes et de têtes de câble.

Le cheminement obligatoire des cordons de liaisons, appelés jarretières, est la cheminée entre deux colonnes adjacentes de la matrice composite qui est formée par les deux sous-matrices. Deux cheminées voisines propres au passage des jarretières sont séparées par deux colonnes adjacentes de la matrice composite. Chaque cheminée comporte des anneaux qui sont superposés verticalement.

Avantageusement les premier et second connecteurs reliés par une ou plusieurs jarretières sont disposés sur une même colonne ou sur deux colonnes adjacentes, ce qui évite tout encombrement des jarretières dans le répartiteur et contribue à disposer de jarretières courtes.

Les anneaux d'une cheminée sont en nombre égal aux lignes de la matrice composite, c'est-à-dire chaque anneau d'une cheminée est au niveau de deux réglettes ou de deux têtes de câble des colonnes adjacentes. Afin d'éviter toute jarretière lâche et entremêlement de jarretières, mais également toute jarretière qui relierait directement une tête de câble et une réglette et qui, par suite, entraverait le cheminement des autres jarretières dans la cheminée, chaque jarretière disposée dans une cheminée passe à travers au moins deux anneaux adjacents de ladite cheminée.

Les moyens pour supporter les câbles internes et externes sont une ossature parallélépipédique en arrière des cheminés à jarretières qui est composée de gouttières et goulottes respectivement parallèles aux lignes et colonnes des deux sous-matrices. Les câbles sont alors tirés par une même face du répartiteur. Afin d'améliorer encore la bonne gestion des connexions des câbles, chaque premier câble dit externe est relié à des premiers connecteurs disposés sur une même ligne et chaque second câble dit interne est relié à des seconds connecteurs disposés sur une même ligne.

D'autres avantages de la présente invention apparaîtront plus clairement à la lecture de la description qui suit d'un exemple préféré de réalisation et des dessins annexés correspondants, dans lesquels:

la Fig. 1 est une vue de face avant schématique d'un répartiteur conforme à l'invention, montrant la disposition relative des têtes de câbles et des réglettes;

la Fig. 2 est une vue de face arrière schématique du répartiteur montrant les cheminements des premiers câbles dits externes;

la Fig. 3 est une vue analogue à la Fig. 2 montrant les cheminements des seconds câbles dits internes desservant directement les équipements de l'autocommutateur;

la Fig. 4 est une vue de face détaillée du répartiteur entre les cheminées verticales A–A et B–B de la Fig. 1;

la Fig. 5 est une vue de côté détaillée du répartiteur; et

la Fig. 6 est une vue de dessus détaillée du répartiteur entre les cheminées verticales A–A et B–B de la Fig. 1.

Afin de fixer les idées, les figures et la description ci-après se réfèrent à un répartiteur pour central téléphonique qui comporte:

– $M \times N = 32$ premiers connecteurs dits têtes de câble $1_{1,1}$ à $1_{4,8}$, chaque tête de câble pouvant être raccordée à au plus 112 lignes téléphoniques à deux fils de premiers câbles dits externes;
– $(M-1) \times N = 24$ seconds connecteurs dits réglettes $2_{1,1}$ à $2_{3,8}$, chaque réglette pouvant être raccordée à au plus 128 lignes téléphoniques à deux fils de seconds câbles dits internes qui relient le répartiteur et les équipements correspondants de l'autocommutateur du central téléphonique; et
– N réglettes $2_{0,1}$ à $2_{0,8}$ dites supplémentaires dont le rôle sera précisé dans la suite.

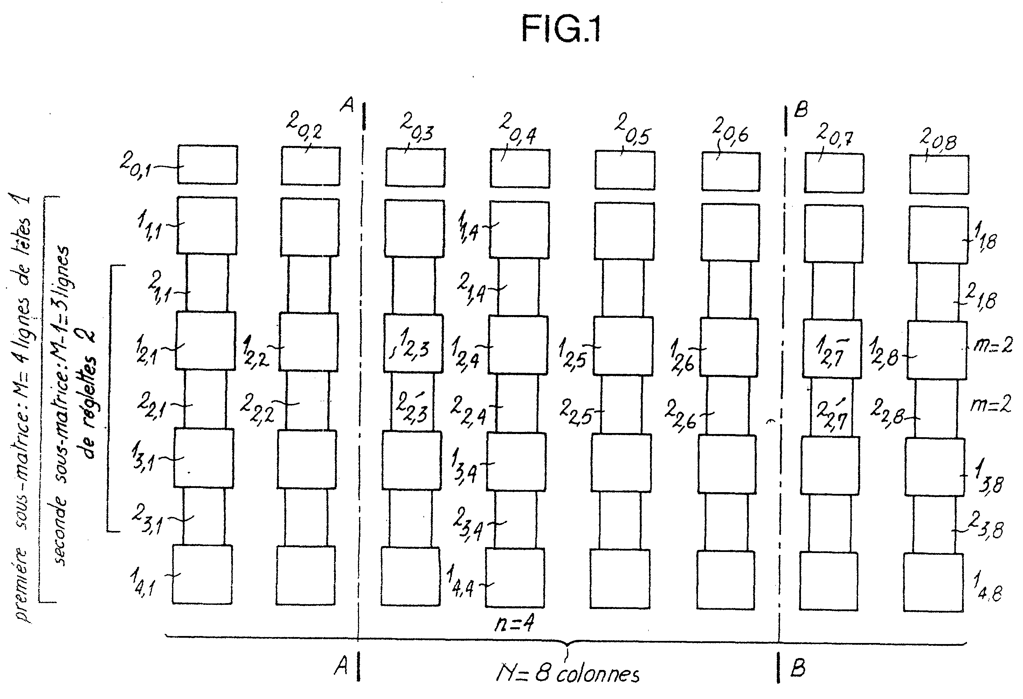

Comme on le voit sur la Fig. 1, montrant la répartition schématique des réglettes et des têtes, le répartiteur selon l'invention est organisé autour d'une matrice composite (rectangulaire) qui est formée par l'entrelacement à l'ordre 2 des lignes d'une première sous-matrice qui est relative aux têtes de câble 1, et des lignes d'une seconde sous-matrice qui est relative aux réglettes 2. Afin de mieux distinguer les têtes 1 et les réglettes 2, elles ont été représentées par des carrés et des rectangles, respectivement, bien qu'en pratique, elles sont généralement à faces rectangulaires. La première sous-matrice comprend $M = 4$ lignes et $N = 8$ colonnes de têtes de câble $1_{m,n}$. La seconde sous-matrice comprend $M-1 = 3$ lignes et $N = 8$ colonnes de réglettes $2_{m,n}$. L'indice m est un entier compris entre 1 et $M = 4$ pour les têtes de câble et compris entre 1 et $M-1 = 3$ pour les réglettes. L'indice n est un entier compris entre 1 et $N = 8$ aussi bien pour les têtes de câble que pour les réglettes. Selon la réalisation montrée à la Fig. 1, les lignes externes de la matrice composite sont celles de la première sous-matrice des têtes de câble 1.

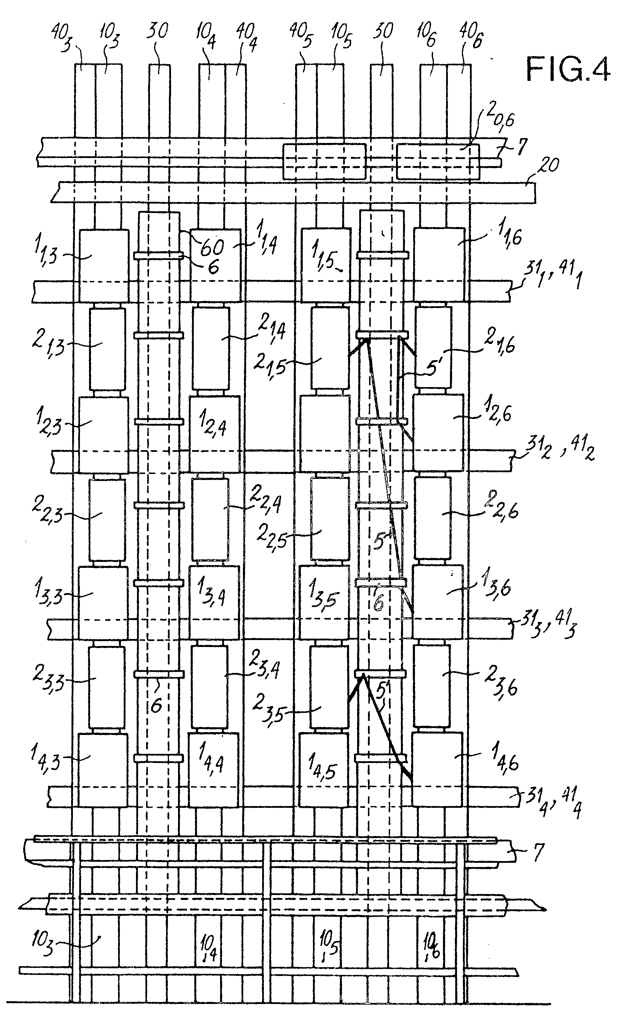

Conformément à l'invention, dans une colonne, les têtes de câble et les réglettes sont alternées, c-est-à-dire à entrelacement d'ordre 2, et sont fixées à une colonne – support $10_1$ à $10_8$ du bâti du répartiteur (Fig. 4). Les colonnes – supports $10_1$ à $10_8$ sont coplanaires sur la face avant du répartiteur. Par exemple sur la $n^{ième}$ colonne on trouve, à partir de la ligne supérieure des têtes de câble $1_{1,1}$ à $1_{1,8}$, la tête supérieure $1_{1,n}$, la réglette $2_{1,n}$, la tête $1_{2,n}$, la réglette $2_{2,n}$, la réglette $2_{3,n}$ et la tête inférieure $1_{4,n}$.

De part cette disposition, toutes les colonnes verticales sont identiques relativement aussi bien à l'encombrement qu'à la capacité des câbles externes et des câbles internes raccordés à l'autocommutateur. La hauteur du répartiteur peut être ajustée en fonction de la hauteur disponible de la salle recevant les différents organes de répartition et d'autocommutation du central et, de manière générale, chaque réglette ou chaque tête de câble est accessible sans échelle.

Selon l'exemple illustré dans les figures, la hauteur d'une colonne à trois réglettes et quatre têtes de câble est de l'ordre de 2 mètres. Le nombre de têtes et de réglettes par colonne est déterminé en fonction de données statistiques relatives notamment à l'écoulement du trafic téléphonique, c'est-à-dire aux taux d'occupation en ligne, côté réseau externe et côté autocommutateur. Ces taux moyens sont respectivement de 70% et de 85%. Par suite, on peut disposer, pour chaque colonne de $(4 \times 112) \times 70\% \approx 313$ lignes, côté câbles externes, et de $(3 \times 128) \times 85\% \approx 326$ lignes, côté câbles internes. Cependant on notera que l'emplacement inférieur ou supérieur d'au moins une cinquième ligne supplémentaire de têtes de câble et d'au moins une quatrième ligne de réglettes peut être prévu si, au cours de l'exploitation, il y a accroissement du trafic du central.

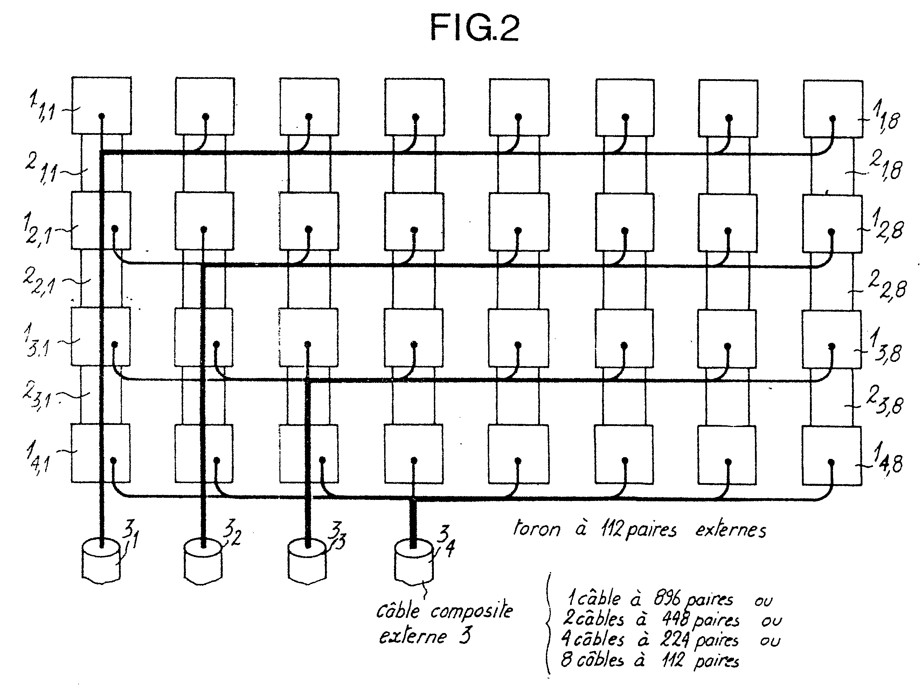

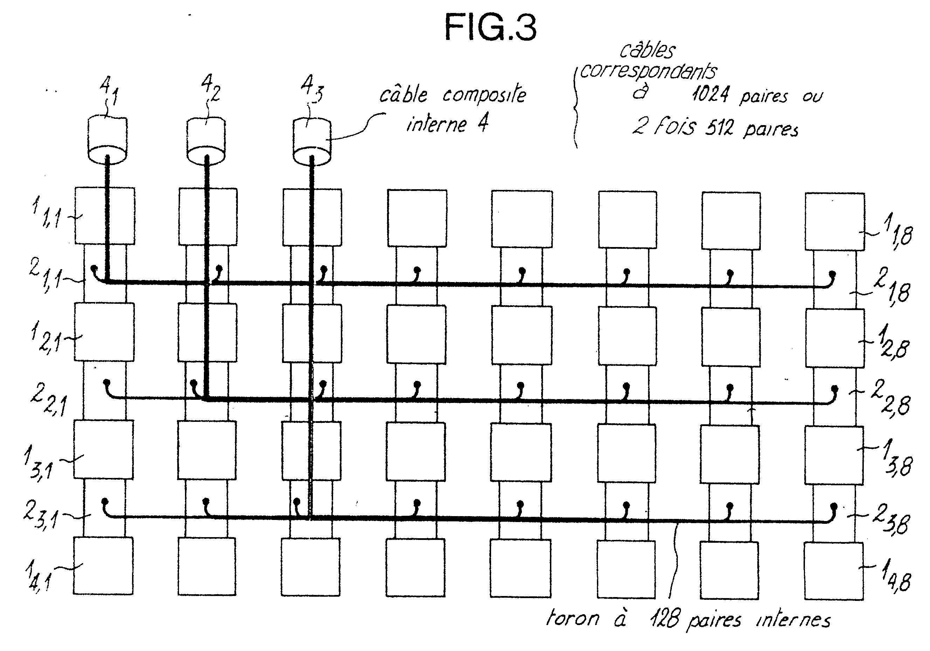

Comme montrées aux Fig. 2 et 3, toutes les lignes externes qui sont reliées à un autre répartiteur ou sont parties de câbles externes généralement souterrains, passant sous le plancher du local du central, et toutes les lignes internes, qui sont reliées aux équipements de l'autocommutateur, sont respectivement raccordées aux têtes et aux réglettes, sur une même face verticale du répartiteur, dite arrière. La description de ces raccordements ne sera pas détaillée, car ils sont d'un genre connu. De même la structure des têtes et des réglettes n'appartient pas au cadre de l'invention. A ce sujet, on notera que les têtes de câble et les réglettes sont, de préférence, du genre décrit dans la FR-A-2 438 353 ou respectivement du genre décrit dans la FR-A-2 440 636 et le FR-B-2 347 797. Les têtes de câbles peuvent être généralement du genre décrit dans la FR-A-2 443 758.

Toutes ces têtes et réglettes comprennent pour chaque paire de fils de ligne un module enfichable comprenant des moyens de protection contre les courants élevés et/ou les tensions élevées, tels que fusibles et/ou parafoudres, et peuvent comporter des bornes autodénudantes.

Par ailleurs, il sera noté qu'on désignera ci-après par «câble externe» un ensemble à $8 \times 112 = 896$, à $4-112 = 448$, à $2 \times 112 = 224$ ou à $112$ lignes (ou paires de fils) externes provenant du réseau externe ou d'un autre répartiteur, à raccorder aux faces arrière de têtes de câble 1, et par «câble interne» un ensemble à $4 \times 128 = 512$ ou à $8 \times 128 = 1024$ lignes (ou paires de fils) internes provenant d'équipements de l'autocommutateur, respectivement dits unités de raccordement des abonnés (U.R.A.) et éléments de sélection de ligne (E.S.L.), à relier aux faces arrière de réglettes 2.

En se référant à la Fig. 2, on voit qu'un câble externe à 896 paires ou deux câbles externes à 448 paires, ou quatre câbles exernes à 224 paires, ou huit câbles externes à 112 paires, désignés dans leur ensemble par un câble composite externe 3, a ses paires raccordées aux faces arrière de têtes de câble $1_{m,1}$ à $1_{m,8}$, disposées suivant une ligne de la première sous-matrice. Selon l'exemple illustré, quatre câbles composites externes $3_1$ à $3_4$ ont leurs paires qui sont dégagées par exemple à la partie inférieure du répartiteur et qui sont raccordées respectivement aux lignes de têtes de câble $1_{1,1}$ à $1_{1,8}$, $1_{2,1}$ à $1_{2,8}$, $1_{3,1}$ à $1_{3,8}$ et $1_{4,1}$ à $1_{4,8}$. Les extrémités des câbles composites externes sont, par exemple, respectivement colinéaires aux quatre premières colonnes de la matrice composite se trouvant à gauche sur la Fig. 2.

Comme montrées en détail sur les Fig. 4 à 6, les 896 paires d'un câble composite $3_m$ sont plaquées verticalement contre des goulottes verticales à section en U $30_m$ jusqu'à la hauteur de la ligne des têtes de câble correspondantes $1_{m,1}$ à $1_{m,8}$. Puis les huit torons à 112 paires de câble composite 3 sont portés par une gouttière horizontale $31_m$ et

raccordés aux faces arrière des huit têtes $1_{m,1}$ à $1_{m,8}$ de la ligne correspondante de la première sous-matrice.

Le cheminement des torons des trois câbles composites internes $4_1$ à $4_3$ correspondant à un câble interne à 1024 paires ou à deux câbles internes à chacun 512 paires est montré schématiquement à la Fig. 3 et est analogue à ceux décrits précédemment. Un câble interne $4_m$ provient par exemple de la partie supérieure du répartiteur. Ses torons à 128 paires sont respectivement raccordés aux faces arrière des huit réglettes $2_{m,1}$ à $2_{m,8}$ d'une même ligne horizontale de la seconde sous-matrice. Les torons dégagés d'un câble composite interne $4_m$ cheminent d'abord ensemble dans une goulotte verticale $40_m$, puis dans une gouttière horizontale $41_m$ sensiblement au niveau de la ligne des huit réglettes correspondantes $2_{m,1}$ à $2_{m,8}$.

De telles conditions d'écheminement assurent un excellent épanouissement des torons des câbles composites. Afin d'éviter toute confusion et concentration des câbles composites externes 3 et internes 4, l'ossature des goulottes et gouttières 30–31 et l'ossature des goulottes et gouttières 40–41 forment, de préférence, deux parrallélépipèdes à mailles rectangulaires parallèles à la face arrière du répartiteur, comme montré à la Fig. 4. Bien entendu, les goulottes verticales 30 ou 40 peuvent être supprimées lorsque les câbles composites externes 3 ou internes 4 sont tirés par côté vertical du répartiteur.

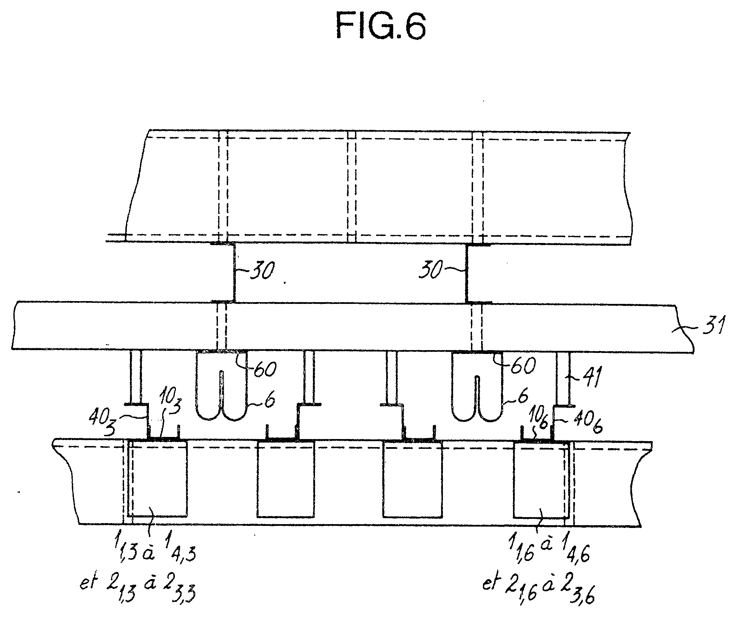

En se référant à nouveau aux Fig. 4 et 6, on décrit le cheminement des cordons de liaison 5, appelés jarretières. Elles sont destinées à relier les bornes qui sont reliées à une paire de fils quelconque dans une tête de câble 1, aux bornes qui sont reliées à une paire de fils quelconque dans une réglette 2. Une seule jarretière quelconque 5 a été représentée sur la fig. 4 afin de ne pas surcharger celle-ci. Elle connecte une paire de fils du câble externe $3_3$ qui est reliée à la tête de câble $1_{3,6}$, à une paire de fils du câble interne $4_1$, qui est reliée à la réglette $2_{1,5}$.

Une jarretière, telle que 5, chemine verticalement entre deux colonnes adjacentes de têtes et de réglettes de la matrice composite, telles que $10_5$ et $10_6$. En général, et sauf cas particuliers précisés ci-dessous, elle connecte une paire de bornes d'une réglette qui est incluse dans le répartiteur et qui appartient à l'une de ces colonnes adjacentes, à une paire de bornes d'une tête qui est incluse dans le répartiteur et qui appartient à cette dernière colonne ou à l'autre colonne adjacente. Ainsi, selon l'exemple illustré, deux cheminées verticales voisines comprenant des jarretières sont séparées par deux colonnes adjacentes de réglettes et de têtes de câble, qui sont séparées par une cheminée vide de jarretière. Le répartiteur comporte $N/2 = 4$ cheminées verticales remplies de jarretières, respectivement entre les première et seconde, troisième et quatrième, cinquième et sixième, septième et huitième colonnes de têtes et de réglettes. Lorsque le répartiteur comporte un nombre impair N de colonnes de têtes et de réglettes adjacentes, il y a $N/2 + 0,5$ cheminées verticales de jarretière, l'une d'elles se trouvant sur un côté vertical du répartiteur.

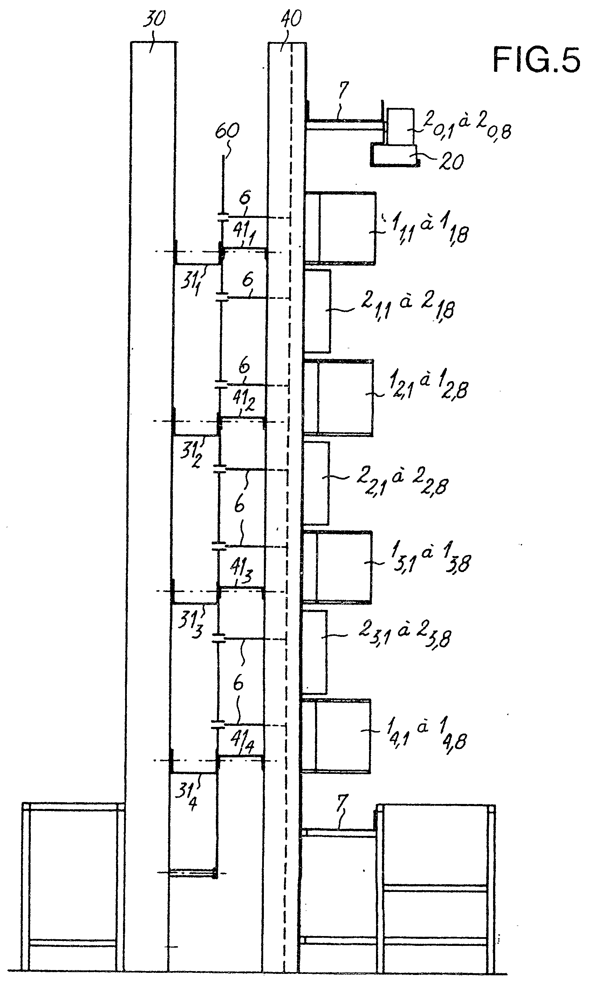

La pose d'une jarretière 5 est effectuée par traversée obligatoire de la jarretière dans au moins deux anneaux. Ces deux anneaux font partie d'une cheminée composée de $(2 M{-}1)$ anneaux horizontaux 6 qui sont centrés sur l'axe médian vertical de la cheminée et qui sont superposés verticalement entre les deux colonnes adjacentes de têtes et de réglettes. De préférence, les anneaux dans une cheminée sont répartis verticalement de sorte que, pour chaque paire de têtes de câble, telles que $1_{3,5}$–$1_{3,6}$, resp. pour chaque paire de réglettes, telles que $2_{1,5}$–$2_{1,6}$ sur une même ligne de deux colonnes adjacentes, un anneau 6 est disposé aux deux-tiers de la hauteur des têtes, resp. des réglettes de la ligne. Ceci contribue à centraliser proprement les jarretières 5. Les plans des anneaux 6 sont horizontaux et sont fixés, par exemple, par soudage à des montants verticaux arrière 60 qui sont devant les gouttières 31 par exemple, c'est-à-dire entre deux colonnes adjacentes de têtes et de réglettes et en arrière de celles-ci, comme montré aux Fig. 5 et 6. Un anneau 6 peut être conformé par la juxtaposition horizontale de deux anses demi-circulaires, par exemple. Selon une réalisation préférée, la surface interne d'un anneau 6 est de l'ordre de 36 cm² et confère un espace propre au passage de 900 jarretières 5.

Le fait que, selon l'exemple illustré de l'invention, des têtes de câble 1 et des réglettes voisines se trouvent sur des niveaux ou lignes horizontales superposés différents, évite qu'une jarretière soit tirée directement et horizontalement. Une telle jarretière, qui peut être présente dans les répartiteurs selon la FR-A-2 317 843 et la FR-A-2 229 177, aurait pour effet de couper le cheminement vertical et de créer des croisements de jarretières. Ainsi, selon l'exemple, les plus courtes jarretières, telles que 5' montrées à la Fig. 4, passent au travers de deux anneaux immédiatement superposés 6 et au niveau des deux lignes voisines comprenant respectivement la tête de câble, telle que $1_{4,6}$ ou $1_{2,6}$, et la réglette, telle que $2_{3,5}$ ou $2_{1,6}$, dont des paires de fils sont à connecter. Toujours selon la réalisation préférée, une jarretière courte a une longueur égale à 40 cm environ.

Le principe de gestion des jarretières permet de satisfaire un maximum de liaisons à jarretière dans une même cheminée verticale d'anneaux. Selon l'exemple illustré, chaque paire de fils de câble externe 3 reliée à une tête de câble 1 parmi quatre d'une colonne a accès à l'une des paires de fils des câbles externes $4_1$ à $4_3$ parmi $6{\times}128 = 768$ des six réglettes 2 de ladite colonne et de la colonne adjacente qui sont séparées par une cheminée d'anneaux 6. Ainsi une paire de fils de câble externe peut avoir accès à trois ensembles disjoints, chacun à $2{\times}128 = 256$ paires de fils d'un câble interne 4. Lorsqu'un équipement de l'autocommutateur dit U.R.A. ou E.S.L., desservi par un câble interne, est saturé, une paire de fils de câble externe reliée à une réglette peut avoir accès aux quatre autres U.R.A. ou aux deux autres E.S.L. dont les câbles internes de raccordement sont déployés le long des deux autres lignes de réglettes.

Des cheminements annexes des jarretières 5 sont prévus pour les cas particuliers où des contraintes supplémentaires, dépendant par exemple du trafic téléphonique ou de la saturation en ligne, ne permettent pas de disposer d'un cheminement de jarretière disponible entre une tête et une réglette. En d'autres termes, il n'y a plus d'accès disponible à l'un des équipements de l'autocommutateur reliés au répartiteur. Dans ce cas, la jarretière est tirée à partir de la tête, d'abord le long de la cheminée d'anneaux correspondante, puis le long de l'un des deux caniveaux horizontaux 7 qui sont respectivement au-dessus et au-dessous de la matrice composite de têtes et de réglettes, comme montré aux Fig. 4 et 5. Ces caniveaux horizontaux peuvent donner accès aux réglettes d'un autre répartiteur rattaché à l'autocommutateur.

Le répartiteur, dans un mode de réalisaton de l'invention, comprend également une ligne de réglettes supplémentaires $2_{0,1}$ à $2_{0,8}$ qui est au-dessous de la matrice composite des têtes $1_{4,1}$ à $1_{4,8}$ et des réglettes $2_{1,1}$ à $2_{3,8}$ ou qui est au-dessus de la matrice composite, comme montré aux Fig. 1, 4 et 5. Chaque réglette supplémentaire d'une colonne est prévue pour accéder à certaines fonctions auxiliaires du traitement d'une communication téléphonique, telles que la télétaxation, l'enregistrement de données statistiques de trafic, etc. Les jarretières provenant de têtes de câble 1 à raccorder à une réglette particulière $2_{0,1}$ à $2_{0,8}$ traversent les anneaux de cheminée correspondante adjacente au-dessus de la tête de câble puis cheminent le long d'une gouttière horizontale 20 qui est au-dessous des réglettes supplémentaires, comme montré aux Fig. 4 et 5.

La codification du site de connexion d'une paire de fils externe reliée à une tête de câble en entrée du répartiteur, resp. d'une paire de fils interne reliée à une réglette en sortie du répartiteur est conforme à une indexation matricielle. Une paire de fils externe est repérée par un triplet (m, n, p,) pour lequel m varie entre 1 et M et désigne la $m^{ième}$ tête de câble dans la colonne d'indice n, n varie entre 1 et N et désigne la $n^{ième}$ colonne à laquelle appartient la tête de câble et p varie entre 1 et P = 112 et désigne le numéro de la paire de fils externe dans la tête. Une paire de fils interne est également repérée par un triplet (m, n, q) pour lequel m varie entre 1 et (M–1), ou M, ou (M+1) et désigne la $m^{ième}$ réglette dans la colonne d'indice n, n varie entre 1 et N et désigne la $n^{ième}$ colonne à laquelle appartient la réglette et q varie entre 1 et Q = 128 et désigne le numéro de la paire de fils interne dans la réglette.

**Revendications**

1. Répartiteur pour interconnecter, au moyen de cordons de liaison (5) traversant des anneaux (6), des bornes de premiers connecteurs (1) reliés aux extrémités de premiers câbles (3) à des bornes de seconds connecteurs (2) reliés aux extrémités de seconds câbles (4), les premiers et seconds connecteurs (1; 2) étant disposés selon deux sous-matrices coplanaires ayant leurs colonnes $(1_n, 2_n)$ (resp. lignes) alignées, caractérisé en ce que les lignes $(1_m; 2_m)$ (resp. colonnes) des deux sous-matrices sont entrelacées à l'ordre deux.

2. Répartiteur conforme à la revendication 1, caractérisé en ce que les cordons de liaison (5) sont disposés dans des cheminées (6) entre deux colonnes (resp. lignes) adjacentes de la matrice composite formée par lesdites deux sous-matrices.

3. Répartiteur conforme à la revendication 2, caractérisé en ce que deux cheminées voisines (6) sont séparées par deux colonnes (resp. lignes) adjacentes de la matrice composite.

4. Répartiteur conforme à la revendication 2 ou 3, caractérisé en ce que des premier et second connecteurs (1; 2) à relier par un ou plusieurs cordons de liaison (5) sont toujours disposés sur une même colonne (resp. ligne) ou sur deux colonnes (resp. lignes) adjacentes.

5. Répartiteur conforme à l'une quelconque des revendications 2 à 4, caractérisé en ce que chaque cheminée comporte des anneaux (6) qui sont en nombre égal aux lignes (resp. colonnes) de la matrice composite et aux mêmes niveaux que les premiers et seconds connecteurs (1, 2) des colonnes (resp. lignes) de la matrice composite.

6. Répartiteur conforme à la revendication 5, caractérisé en ce que chaque cordon de liaison (5) disposé dans une cheminée passe à travers au moins deux anneaux adjacents (6) de ladite cheminée.

7. Répartiteur conforme à la revendication 5 ou 6, caractérisé en ce que chaque anneau (6) est au deux-tiers de la dimension d'un premier, resp. second connecteur (1, 2) relative à une colonne (resp. ligne).

8. Répartiteur conforme à l'une quelconque des revendications 1 à 7, caractérisé en ce qu'il comprend deux ensembles à goulottes et gouttières (30, 31; 40, 41) respectivement parallèles aux lignes et colonnes des deux sous-matrices qui sont propres respectivement au cheminement des premiers et seconds câbles (3; 4) vers les premiers et seconds connecteurs (1; 2).

9. Répartiteur conforme à la revendication 8, caractérisé en ce que les deux ensembles à goulottes et gouttières (30, 31; 40, 41) sont disposés devant une même face desdites deux sous-matrices des premiers et seconds connecteurs (1; 2).

10. Répartiteur conforme à l'une quelconque des revendications 1 à 9, caractérisé en ce que chaque premier câble (3) est relié à des premiers connecteurs (1) disposés sur une même ligne (resp. colonne) et chaque second câble (4) est relié à des seconds connecteurs (2) disposés sur une même ligne (resp. colonne).

11. Répartiteur conforme à l'une quelconque des revendications 1 à 10, caractérisé en ce qu'il comprend au moins un caniveau (7) en dessus ou en dessous des lignes (resp. colonnes) desdites deux sous-matrices pour acheminer des cordons de liaison (5) reliés à des premiers connecteurs (1) vers l'extérieur du répartiteur.

12. Répartiteur pour central téléphonique conforme à l'une quelconque des revendications 1 à 11, caractérisé en ce qu'il comprend une ligne (resp. colonne) de seconds connecteurs supplémentaires ($2_0$) pour relier, à travers des premiers connecteurs (1) et des cordons de liaison (5), des premiers câbles (3) à des organes auxiliaires de traitement des communications téléphoniques convoyées par lesdits premiers câbles (3).

## Patentansprüche

1. Verteiler für die Zusammenschluss-Klemmen an den Enden von ersten Kabeln (3) verbundenen ersten Anschlussleisten (1) mit Klemmen an den Enden von zweiten Kabeln (4) verbundenen zweiten Anschlussleisten (2) mit Hilfe der durch Führungen (6) verlaufenden Verbindungsschnuren (5), wobei die ersten und zweiten Anschlussleisten (1; 2) in zwei koplanaren Untermatrizen mit abgeglichenen Spalten ($1_n$, $2_n$) (bzw. Zeilen) angeordnet sind, dadurch gekennzeichnet, dass die Zeilen ($1_m$; $2_m$) (bzw. Spalten) der beiden Untermatrizen paarweise verflochten sind.

2. Verteiler gemäss Patentanspruch 1, dadurch gekennzeichnet, dass die Verbindungsschnuren (5) in Durchführungen (6) zwischen zwei nebeneinanderliegenden Spalten (bzw. Zeilen) der aus den beiden Untermatrizen gebildeten Hauptmatrix angeordnet sind.

3. Verteiler gemäss Patentanspruch 2, dadurch gekennzeichnet, dass zwei benachbarte Durchführungen (6) durch zwei nebeneinanderliegende Spalten (bzw. Zeilen) der Hauptmatrix getrennt sind.

4. Verteiler gemäss Patentanspruch 2 oder 3, dadurch gekennzeichnet, dass die durch eine oder mehrere Verbindungsschnuren (5) zu verbindenden ersten und zweiten Anschlussleisten (1; 2) immer in ein und derselben Spalte (bzw. Zeile) oder in zwei nebeneinanderliegenden Spalten (bzw. Zeilen) angeordnet sind.

5. Verteiler gemäss jedem beliebigen der Patentansprüche 2 bis 4, dadurch gekennzeichnet, dass jede Durchführung mit Führungen (6) versehen ist, deren Stückzahl der Zahl der Zeilen (bzw. Spalten) der Hauptmatrix entspricht und die mit den ersten und zweiten Anschlussleisten (1, 2) der Spalten (bzw. Zeilen) der Hauptmatrix auf gleicher Ebene liegen.

6. Verteiler gemäss Patentanspruch 5, dadurch gekennzeichnet, dass jede in einer Durchführung befindliche Verbindungsschnur (5) durch mindestens zwei nebeneinanderliegende Führungen (6) innerhalb der genannten Durchführung verläuft.

7. Verteiler gemäss Patentanspruch 5 oder 6, dadurch gekennzeichnet, dass jede Führung (6) zwei Drittel der eine Spalte (bzw. Zeile) betreffenden Grösse einer ersten bzw. zweiten Anschlussleiste (1, 2) hat.

8. Verteiler gemäss jedem beliebigen der Patentansprüche 1 bis 7, dadurch gekennzeichnet, dass er mit zwei Satz Ablaufrinnen und Rinnen (30, 31; 40, 41) versehen ist, die jeweils mit den Zeilen und Spalten der beiden Untermatrizen parallel verlaufen und den Durchgängen der ersten und zweiten Kabel (3; 4) zu den ersten und zweiten Anschlussleisten (1; 2) zugeordnet sind.

9. Verteiler gemäss Patentanspruch 8, dadurch gekennzeichnet, dass die zwei Satz Ablaufrinnen und Rinnen (30, 31; 40, 41) vor einer gleichen Stirnfläche der beiden Untermatrizen der ersten und zweiten Anschlussleisten (1; 2) angeordnet sind.

10. Verteiler gemäss jedem beliebigen der Patentansprüche 1 bis 9, dadurch gekennzeichnet, dass jedes erste Kabel (3) an die ersten in der gleichen Zeile (bzw. Spalte) befindlichen Anschlussleisten (1) und jedes zweite Kabel (4) an die zweiten in der gleichen Zeile (bzw. Spalte) befindlichen Anschlussleisten (2) verbunden ist.

11. Verteiler gemäss jedem beliebigen der Patentansprüche 1 bis 10, dadurch gekennzeichnet, dass er mit wenigstens einem Leitungskanal (7) über oder unter den Zeilen (bzw. Spalten) der genannten beiden Untermatrizen zum Durchgang der mit den ersten Anschlussleisten (1) verbundenen Verbindungsschnuren (5) aus dem Äusseren des Verteilers versehen ist.

12. Verteiler für Fernsprechvermittlung gemäss jedem beliebigen der Patentansprüche 1 bis 11, dadurch gekennzeichnet, dass er eine Zeile (bzw. Spalte) mit zweiten zusätzlichen Anschlussleisten ($2_0$) aufweist, um die ersten Kabel (3) über die ersten Anschlussleisten (1) und die Verbindungsschnuren (5) mit den Hilfselementen zur Verarbeitung der über diese ersten Kabel (3) geführten Telefongespräche zu verbinden.

## Claims

1. Distribution frame for interconnecting, through link cords (5) running through rings (6), terminals of first connectors (1) that are linked to the ends of first cables (3), to terminals of second connectors (2) linked to ends of second cables (4), the first and second connectors (1; 2) being arranged in a two coplanar sub-matrices having their columns ($1_n$; $2_n$) (resp. lines) aligned, characterized in that the lines ($1_m$; $2_m$) (resp. columns) of the two sub-matrices are double interlaced.

2. Distribution frame according to claim 1, characterized in that the link cords (5) are routed in corridors (6) between two adjacent columns (resp. lines) of the composite matrix formed by said two sub-matrices.

3. Distribution frame according to claim 2, characterized in that two neighbouring corridors (6) are separated by two adjacent columns (resp. lines) of the composite matrix.

4. Distribution frame according to claim 2 or 3, characterized in that first and second connectors (1; 2) to be connected by one or several link cords (5) are always lodged in a same column (resp. lines) or in two adjacent columns (resp. lines).

5. Distribution frame according to any one of claims 2 to 4, characterized in that each corridor comprises rings (6) that are equal in number to the lines (resp. columns) of the composite matrix and at the respective levels as the first and second connectors (1; 2) of the columns (resp. lines) of the composite matrix.

6. Distribution frame according to claim 5, characterized in that each link cord (5) routed in a corridor runs through at least two adjacent rings (6) of said corridor.

7. Distribution frame according to claim 5 or 6, characterized in that each ring (6) comes to two thirds the dimension of a first, resp. second connector (1; 2) in relation to a column (resp. line).

8. Distribution frame according to any one of claims 1 to 7, characterized in that it comprises two assemblies having channels and grooves (30, 31; 40, 41) which are respectively parallel to the lines and columns of said two sub-matrices and which are respectively adapted to the path taken by the first and second cables (3; 4) to the first and second connectors (1; 2).

9. Distribution frame according to claim 8, characterized in that the two channel and groove assemblies (30, 31; 40, 41) are arranged in front of the same side of said two sub-matrices of the first and second connectors (1; 2).

10. Distribution frame according to any one of claims 1 to 9, characterized in that each first cable (3) is linked to first connectors (1) lodged in a same line (resp. column) and each second cable is linked to second connectors (2) lodged in a same line (resp. column).

11. Distribution frame according to any one of claims 1 to 10, characterized in that it comprises at least one conduit (7) above or below the lines (resp. columns) of said two sub-matrices for routing link cords (5) connected to first connectors (1) out from said distribution frame.

12. Distribution frame for telephone exchange according to any one of claims 1 to 11, characterized in that it comprises a line (resp. column) of second additional connectors ($2_0$) for linking, via first connectors (1) and link cords (5), first cables (3) to auxiliary means for processing telephone calls carried by said first cables (3).

première sous-matrice: M= 4 lignes de têtes 1

seconde sous-matrice: M-1= 3 lignes de réglettes 2

# FIG.1

$1_{4,1}$  $2_{3,1}$  $1_{3,1}$  $2_{2,1}$  $1_{2,1}$  $2_{1,1}$  $1_{1,1}$  $2_{0,1}$

$2_{2,2}$  $1_{2,2}$  $2_{0,2}$

A  A  $2_{0,3}$

$2_{2,3}$  $1_{2,3}$

$1_{4,4}$  $2_{3,4}$  $1_{3,4}$  $2_{2,4}$  $1_{2,4}$  $2_{1,4}$  $1_{1,4}$  $2_{0,4}$

n=4  N=8 colonnes

$2_{2,5}$  $1_{2,5}$  $2_{0,5}$

$2_{2,6}$  $1_{2,6}$  $2_{0,6}$

B  B  $2_{0,7}$

$2_{2,7}$  $1_{2,7}$

$1_{4,8}$  $2_{3,8}$  $1_{3,8}$  m=2  $1_{2,8}$  $2_{2,8}$  m=2  $2_{1,8}$  $1_{1,8}$  $2_{0,8}$

# FIG.2

toron à 112 paires externes

câble composite externe 3

1 câble à 896 paires ou
2 câbles à 448 paires ou
4 câbles à 224 paires ou
8 câbles à 112 paires

# FIG.3

$4_1$   $4_2$   $4_3$

câble composite interne 4

câbles correspondants à 1024 paires ou 2 fois 512 paires

$1_{1,1}$   $1_{1,8}$

$2_{1,1}$   $2_{1,8}$

$1_{2,1}$   $1_{2,8}$

$2_{2,1}$   $2_{2,8}$

$1_{3,1}$   $1_{3,8}$

$2_{3,1}$   $2_{3,8}$

$1_{4,1}$   $1_{4,8}$

toron à 128 paires internes

FIG.4

FIG.5

0 042 314

# FIG.6

$30$  $30$  $31$

$60$  $60$  $41$

$6$  $6$

$40_3$  $10_3$  $10_6$  $40_6$

$1_{,3}$ à $1_{4,3}$  $1_{,6}$ à $1_{4,6}$

et $2_{1,3}$ à $2_{3,3}$  et $2_{1,6}$ à $2_{3,6}$